# EUROPEAN PATENT APPLICATION

(11) **EP 2 001 151 A2**
(43) Date of publication of application: **10.12.2008**
(21) Application number: 08710324.8
(22) Date of filing: 07.02.2008
(51) Int. Cl.: H04J 11/00, H04B 7/08

(54) **OFDM RECEPTION DEVICE**

(30) Priority: 09.02.2007 JP 2007029997
(71) Applicant: Panasonic Corporation, Kadoma-shi Osaka 571-8501 (JP)
(72) Inventor: TANIGUCHI, Tomohiko Panasonic Corporation, 1-61, Shiromi 2-chome, Chuo-ku,Osaka-shi Osaka 540-6207 (JP)
(74) Representative: Pautex Schneider, Nicole Véronique
(86) International application number: PCT/JP2008/000170
(87) International publication number: WO 2008/096541

(57) **Abstract**

The number of bits required to express data for one carrier to be treated in the deinterleave unit is changed according to the interleaving length. For example, when the interleaving length is the longest interleaving length, the number of bits of data for one carrier is set to "N", and when the interleaving length is one half of the longest interleaving length, the number of bits of data for one carrier is 2N at the maximum.

## Description

### TECHNICAL FIELD

The present invention relates to a technique for demodulating signals modulated by OFDM modulation.

### BACKGROUND ART

The digitalization of broadcasting is proceeding around the world. In Japan and Europe, for example, an Orthogonal Frequency Division Multiplexing (hereinafter, OFDM) transmission system has been adopted as the terrestrial digital TV broadcasting system. In the OFDM modulation system, signal sequences are transmitted by several thousand carriers unlike in the conventional transmission systems such as the terrestrial analog TV broadcasting system using a single carrier. The signal transmission using multicarrier modulation has a long symbol period.

Japan's terrestrial digital TV broadcasting system also uses mechanisms called "time interleaving" and "frequency interleaving". In an interleaving process, data is sorted in the time and frequency directions as specified on the signal transmitter side. Then, the data is sorted again to return it to the original order on the receiver side (which is called "deinterleaving"). The interleaving and deinterleaving processes improve the quality of a received signal sequence when a reception error is concentrated in a certain portion thereof. For example, a television signal being received in a mobile object such as a car can suddenly change its level. If the signal level decreases, the received signal is buried in noise, causing data containing a reception error to be concentrated in a certain portion of the received signal sequence. However, the data in the received signal can be sorted in a certain range to disperse data containing the reception error. Thus dispersing the reception error can reduce the proportion of the data containing the reception error per unit block in which an error correction process is performed. This results in an improvement of the error correction effect obtained by an error correction code process.

In interleaving and deinterleaving processes, data is sorted in a certain period. The data sorting requires the data to be stored in a storage unit such as a memory. The longer the interleaving period, the more resistant the data is to burst errors, but the storage unit requires a larger circuit size. Since the deinterleaving process is performed on the broadcast wave receiver side, an increase in the memory capacity required for the deinterleaving process has a great influence on the receiver.

Therefore, Japan's terrestrial digital TV broadcasting system predetermines the time interleaving length and puts a ceiling on the amount of delay required for the interleaving and deinterleaving processes. Furthermore, techniques for reducing the amount of memory required for a deinterleaving process are well-known (described, for example, in Patent Document 1 shown below), and broadcasting systems using the interleaving process based on these techniques are used in practical applications.

As described above, a signal subjected to an interleaving process before transmission needs to be subjected to a deinterleaving process in which data sorted in the interleaving process is sorted again to return it to the original order on the receiver side. The deinterleaving process requires the data to be once stored in a storage unit such as a memory.

Japan's terrestrial digital TV broadcasting system has three transmission modes indicating the number of OFDM carriers, and each transmission mode has four time interleaving lengths. The storage unit required for the deinterleaving process needs to have a capacity corresponding to the longest interleaving period.

For example, in Japan's terrestrial digital TV broadcasting system, when the transmission mode is mode 3 and the interleaving length is the longest of the four, the relation between the number of delay symbols "d" and the OFDM carrier number "I" to be given to data can be expressed by d = i × {(I × 5)mod96} + m where "I" is a carrier number, "i" is a parameter of the interleaving length, and "m" is an adjusted delay symbol number. The parameter "i" of the interleaving length is one of 0, 1, 2, and 4.

It is necessary to store data corresponding to the number of delay symbols of each OFDM symbol. Therefore, the storage unit needs to have a storage capacity corresponding to the sum of the number of bits required to express data contained in one carrier × the number of carriers × the maximum number of delay symbols.

More specifically, in the Japan's terrestrial digital broadcasting standard, when the transmission mode is 3 and the parameter "i" of the interleaving length is 4, the maximum value of the number of delay symbols is 408. Hence, when the number of bits required to express data for one carrier is "N", each carrier having the maximum number of delay symbols requires memory of N × 408. On the other hand, when the parameter "i" of the interleaving length is 2, the maximum of the number of delay symbols is 204, which is half the number in the case where "i" is 4. Therefore, when the number of bits required to express data for one carrier is "N", each carrier having the maximum number of delay symbols requires memory of "N" × 204.

If the number of bits per piece of data to be sorted in the deinterleaving process is decreased in order to reduce the capacity of the storage unit required for the deinterleaving process, demodulation performance is deteriorated.

In order to prevent the deterioration of the demodulation performance, the conventional OFDM receivers fix the number of bits required to express data for one carrier, and have a memory capacity corresponding to the longest interleaving length (that is, the parameter "i" of the interleaving length is 4).

In the case where the number of bits required to express data for one carrier is fixed, however, when the interleaving length is not the longest (for example, when the parameter "i" of the interleaving length is 2), only part of the memory is used, failing to make effective use of the unused memory region to improve demodulation performance.

Patent Document1: Japanese Patent Unexamined Publication No.3239084

### SUMMARY OF THE INVENTION

The OFDM receiver of the present invention includes a demodulation unit and a deinterleave unit. The demodulation unit receives an OFDM signal in a frequency domain and outputs a transmitted signal's propagation characteristics estimation value signal as the estimate of transmitted signal's propagation characteristics of each OFDM carrier, a divided complex signal obtained by dividing the OFDM signal in the frequency domain by the transmitted signal's propagation characteristics estimation value signal, an OFDM parameter signal obtained by decoding a TMCC signal contained in the OFDM signal in the frequency domain, and a quantization bit width signal indicating quantization bit widths of the divided complex signal and the transmitted signal's propagation characteristics estimation value signal. The deinterleave unit sorts the data of the divided complex signal in the frequency and time directions based on the OFDM parameter signal and the quantization bit width signal, and outputs the divided complex signal together with the transmitted signal's propagation characteristics estimation value signal as deinterleaved signals. The bit width of the deinterleaved signals outputted from the deinterleave unit are changed according to an interleaving length signal contained in the OFDM parameter signal. For example, when the interleaving length is the longest, the number of bits of data for one carrier is set to "N". When the interleaving length is one half of the longest length, the number of bits of data for one carrier is 2N at the maximum.

In the case where the interleaving length is hardly set to the longest length and normally set to one half of the longest length, data to be treated in the deinterleave unit is assigned with bit width "N" that provides satisfactory demodulation performance when the interleaving length is one half of the longest length. If the interleaving length becomes the longest length, the bit width of the data to be treated in the deinterleave unit can be reduced to N/2.

When receiving a signal transmitted with the interleaving length set other than the longest length, the number of bits required to express the data to be treated in the deinterleave unit can be increased without an increase in the capacity of the memory unit. This improves the bit precision of signals to be transmitted after the deinterleaving process, thereby improving demodulation performance.

In the case where the longest interleaving length is hardly set, the memory capacity can be suited to interleaving lengths shorter than the longest length to prevent an increase in the circuit size and to perform the demodulation process of a signal received with the interleaving length set to the longest length.

### BRIEF DESCRIPTION OF THE DRAWINGS

Fig. 1 is a block diagram showing an OFDM receiver according to a first embodiment of the present invention.
Fig. 2 is a block diagram showing a demodulation unit, a deinterleave unit, a demapping unit, and a storage unit of Fig. 1.
Fig. 3 is a block diagram showing an OFDM receiver according to a second embodiment of the present invention.
Fig. 4 is a flowchart showing the operations of a combining unit and a deinterleave unit of Fig. 3.

### REFERENCE MARKS IN THE DRAWINGS

- 101: antenna
- 102: station selector
- 103: tuner
- 104: A/D converter
- 105: quadrature detection unit
- 106: synchronization unit
- 107: frequency conversion unit
- 108: demodulation unit
- 109: deinterleave unit
- 110: demapping unit
- 111: bit deinterleave unit
- 112: error correction unit
- 113: storage unit
- 201: transmitted signal's propagation characteristics estimation unit
- 202: divider unit
- 203: TMCC signal decoding unit
- 204: quantization bit width determination unit
- 205: quantization unit
- 207: amount-of-noise detection unit
- 301: first antenna
- 302: first tuner
- 303: first A/D converter
- 304: first quadrature detection unit
- 305: first synchronization unit
- 306: first frequency conversion unit
- 307: first demodulation unit
- 308: combining unit
- 309: deinterleave unit
- 310: storage unit
- 311: first demapping unit
- 312: first bit deinterleave unit
- 313: first error correction unit
- 314: station selector
- 401: second antenna
- 402: second tuner
- 403: second A/D converter
- 404: second quadrature detection unit
- 405: second synchronization unit
- 406: second frequency conversion unit
- 407: second demodulation unit
- 411: second demapping unit
- 412: second bit deinterleave unit
- 413: second error correction unit

### DETAILED DESCRIPTION OF PREFERRED EMBODIMENTS

Embodiments of the present invention are described as follows with reference to drawings.

### FIRST EMBODIMENT

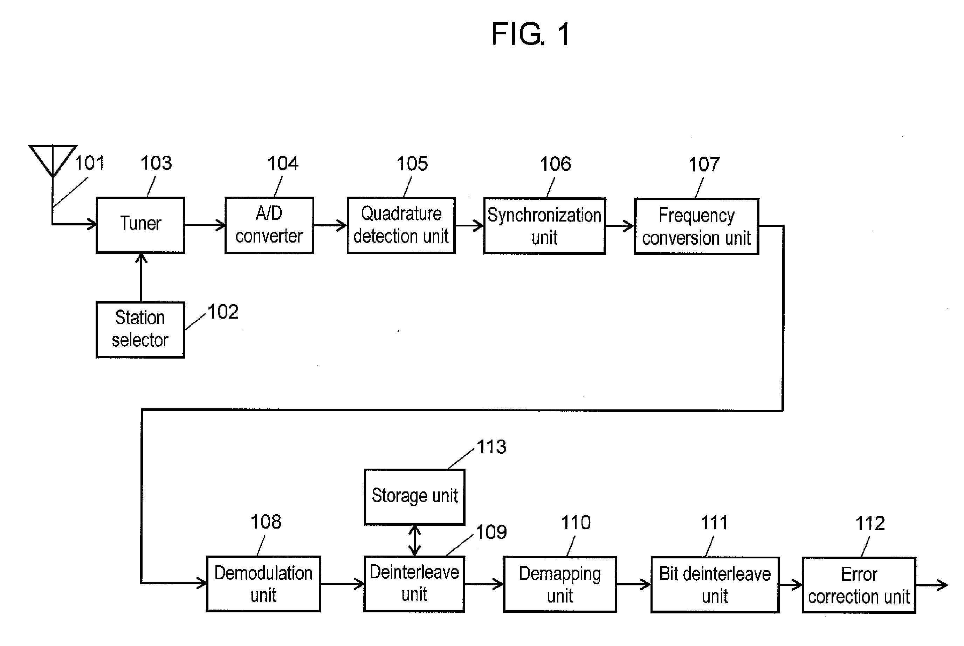

An OFDM receiver of an embodiment of the present invention is described as follows with reference to drawings. Fig. 1 is a block diagram of the OFDM receiver.

As shown in Fig. 1, the OFDM receiver of the present embodiment includes antenna 101, station selector 102, tuner 103, A/D converter 104, quadrature detection unit 105, synchronization unit 106, frequency conversion unit 107, demodulation unit 108, deinterleave unit 109, demapping unit 110, bit deinterleave unit 111, error correction unit 112, and storage unit 113.

Antenna 101 converts a broadcast wave received from a broadcasting station into an electrical signal and outputs it. Station selector 102 specifies a frequency range which is selected by tuner 103 in accordance with the instructions from the user, a program, or the like. Tuner 103 extracts a signal in the frequency range specified by station selector 102 from the electrical signal received from antenna 101, and converts it into an analog signal in the baseband or in a certain frequency range.

A/D converter 104 converts the analog signal received from tuner 103 into a digital signal. Quadrature detection unit 105 converts the digital signal received from A/D converter 104 into a baseband OFDM signal. The baseband OFDM signal means a signal in the same band as the signal OFDM modulated in the transmitter station. This conversion is performed because there are cases where the analog signal outputted to A/D converter 104 becomes a signal in an intermediate frequency (IF) band having a center frequency of 4 MHz or 57 MHz depending on the structure of tuner 103.

Synchronization unit 106 detects the baseband OFDM signal received from quadrature detection unit 105 so as to calculate and correct the frequency error between the transmission signal and the frequency reference signal of the demodulation unit. Synchronization unit 106 also calculates the positions of an OFDM symbol period and a guard interval period of the baseband OFDM signal, and selects the signal having the OFDM symbol period length that minimizes the inter-symbol interference. Synchronization unit 106 then outputs the selected signal to frequency conversion unit 107.

Frequency conversion unit 107 converts the OFDM signal, which has the same length as the signal having the effective symbol period selected and outputted by synchronization unit 106, into OFDM signals in the frequency domain and outputs them to demodulation unit 108. This conversion is performed by, for example, a FFT (First Fourier Transform) calculation process. The OFDM signals in the frequency domain become complex signals corresponding to the number of FFT points in the FFT calculation process. Signals per OFDM carrier can be extracted by taking out data corresponding to the OFDM carrier frequency. The number of FFT points of the FFT calculation process is determined by the transmission mode of an OFDM signal. The transmission mode is selected from the predetermined transmission modes when the OFDM signal is modulated.

Demodulation unit 108 receives the OFDM signals in the frequency domain from frequency conversion unit 107. Then, demodulation unit 108 extracts and demodulates TMCC (Transmission and Multiplexing Configuration and Control) signals inserted in a specific OFDM carrier of the OFDM signals in the frequency domain. As a result, demodulation unit 108 reproduces various parameter information (such as carrier modulation scheme/convolusional coding rate at each hierarchical level, interleaving length, and the number of segments). The parameter information (hereinafter, OFDM parameter signals) is used to modulate the OFDM signals.

Demodulation unit 108 also extracts pilot signals from the OFDM signals in the frequency domain. Similar to the case of TMCC signals, pilot signals are buried in the position of the OFDM signals that is determined according to the transmission standard when the OFDM signals are modulated. The pilot signals are disposed in the OFDM carrier at regular intervals in the frequency and time directions. Demodulation unit 108 extracts the OFDM signals in the frequency domain of the OFDM carrier containing the pilot signals, and compares the extracted signals with the reference values (the known amplitude and phase) to determine changes in amplitude and phase. Demodulation unit 108 thus calculates the transmitted signal's propagation characteristics (the degrees of deviation in amplitude and phase) of the OFDM carrier containing the pilot signals.

Next, demodulation unit 108 calculates the transmitted signal's propagation characteristics of all OFDM carriers by utilizing the fact that the pilot signals are known-pattern signals. The above-described approach has provided the estimation results of the transmitted signal's propagation characteristics of the OFDM carrier containing the pilot signals. Therefore, the transmitted signal's propagation characteristics obtained from the pilot signals can be interpolated in the time and frequency directions to estimate the transmitted signal's propagation characteristics of the OFDM carrier in the vicinity of the pilot signals. Demodulation unit 108 then divides the OFDM signals in the frequency domain received from frequency conversion unit 107 by the transmitted signal's propagation characteristics (estimation results) corresponding to these signals. Thus, the received signals can be divided by the estimates of the transmitted signal's propagation characteristics to obtain the estimates of the transmitted signal points.

Demodulation unit 108 then outputs divided complex signals and transmitted signal's propagation characteristics estimation value signals to deinterleave unit 109. The divided complex signals are complex signals obtained by the division, and the transmitted signal's propagation characteristics estimation value signals are signals indicating the magnitudes (for example, transfer function power) of the estimates of the transmitted signal's propagation characteristics of each OFDM carrier. At the same time, demodulation unit 108 outputs to deinterleave unit 109 signals indicating symbol numbers and carrier numbers showing the OFDM carrier containing the divided complex signals and the transmitted signal's propagation characteristics estimation value signals, and the OFDM parameter signals obtained by decoding the TMCC signals. Before being outputted to deinterleave unit 109, the divided complex signals and the transmitted signal's propagation characteristics estimation value signals need to be quantized. For example, each divided complex signal can be set to have a quantization bit width of 8 bits for the real part and 8 bits for then imaginary part, and each transmitted signal's propagation characteristics estimation value signal can be set to have a quantization bit width of 4 bits to output 20 bits (8 bits + 8 bits + 4 bits) of data per OFDM carrier. It is alternatively possible to double the transfer speed of data and to output the real part and the imaginary part separately, thereby halving the number of bits to be outputted one time. In the present embodiment, the quantization bit widths of deinterleaved signals to be outputted from deinterleave unit 109 are changed according to the length of the interleaving contained in the OFDM parameter signals. How the quantization bit widths are determined from the interleaving length is described later in detail.

Deinterleave unit 109 receives from demodulation unit 108 the divided complex signals and the transmitted signal's propagation characteristics estimation value signals in the unit of OFDM carrier, the signals indicating the symbol numbers and the carrier numbers showing the OFDM carrier containing the divided complex signals and the transmitted signal's propagation characteristics estimation value signals, and the OFDM parameter signals obtained by decoding the TMCC signals.
Deinterleave unit 109 also receives from demodulation unit 108 quantization bit width signals, which contain information on quantization bit widths. Deinterleave unit 109 then sorts the data of the divided complex signals in the frequency and time directions so that the data sorted (interleaving process) when the signals were transmitted is sorted again to return it to the original order.

The data sorting of the divided complex signals is predetermined. For example, in Japan's terrestrial digital TV broadcasting system, the sorting rule in the time direction in the interleaving is determined from the parameter (the parameter of the interleaving length) obtained when demodulation unit 108 demodulates the TMCC signals. The sorting rule in the frequency direction in the interleaving is determined from the transmission mode of the OFDM signals. When data is sorted, storage unit 113 such as a memory is used. Deinterleave unit 109 sorts data and outputs deinterleaved signals. Deinterleave unit 109 also outputs the OFDM parameter signals obtained by decoding the TMCC signals received from demodulation unit 108 and the signals indicating the OFDM carrier numbers. How deinterleave unit 109 sorts data is described later in detail.

Demapping unit 110 restores the bit data of the deinterleaved signals received from deinterleave unit 109 based on the information contained in the deinterleaved signals. The divided complex signals obtained from deinterleave unit 109 contain information on the amplitude and the phase. Therefore, demapping unit 110 determines the carrier modulation applied to the divided complex signals based on the signals indicating the OFDM carrier numbers and the information obtained by decoding the TMCC signals, and restores the bit data using the determined results.

The restoration of the bit data is performed by comparing the estimates of the transmitted signal points obtained by demodulation unit 108 (the divided complex signals obtained by dividing the OFDM signals in the frequency domain by the estimates of the transmitted signal's propagation characteristics) and the mapping points determined according to the carrier modulation (such as 16 QAM or 64 QAM). For example, it is possible to use a method called hard decision which determines the mapping points closest to the estimates of the transmitted signal points and assumes that the code sequences assigned to the closest mapping points are the transmitted code sequences. It is also possible to use a method called soft decision in which an error correction code process is performed by considering reliability information in the error correction process by adding information on the reliability of the transmitted code sequences to the hard decision results. The information on the reliability of the transmitted code sequences is obtained from the information on the distances between the estimates of the transmitted signal points and the mapping points, and the information on the size of the estimates of the transmitted signal's propagation characteristics of the OFDM carrier containing the estimates of the transmitted signal points. Demapping unit 110 then outputs the bit data obtained from the estimates of the transmitted signal points to bit deinterleave unit 111. In the case of a hard decision process, bit strings of 0's and 1's are outputted, whereas in the case of a soft decision process, "a likelihood of 0" and "a likelihood of 1" are outputted as discrete values. The calculation of the bit data by demapping unit 110 is described in detail later.

Bit deinterleave unit 111 sorts the output values of demapping unit 110. The sorting method is predetermined in the same manner as in deinterleave unit 109, and the data sorted when the signals were modulated is sorted again to return it to the original order according to the method.

Error correction unit 112 performs an error correction code process using either the reliability value (a likelihood of 0, or a likelihood of 1) of the bit data strings or each bit data received from bit deinterleave unit 111. In such error correction, an error correction method called Viterbi decoding is often used, and is often combined with Reed-Solomon correction code. The error correction is performed according to the encoding method prescribed by the encoder on the modulation side of the signal. In the encoding method, for example, data series signals called transport streams are outputted.

Storage unit 113 is used when deinterleave unit 109 sorts data.

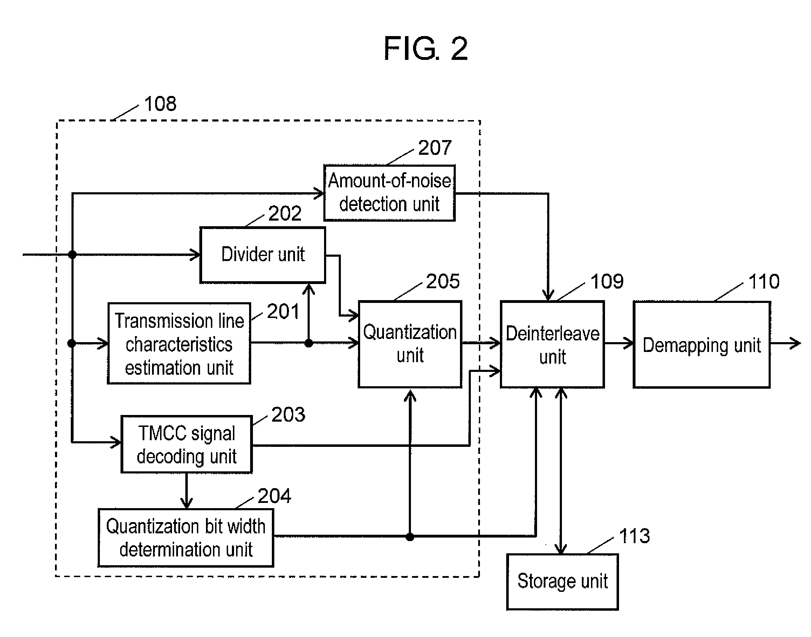

The following is a detailed description of the structure and operation of demodulation unit 108, deinterleave unit 109, demapping unit 110, and storage unit 113 of the OFDM receiver of the present embodiment. Fig. 2 is a block diagram showing the detailed structure of demodulation unit 108, deinterleave unit 109, demapping unit 110, and storage unit 113 of the OFDM receiver of the present embodiment.

Demodulation unit 108 includes transmitted signal's propagation characteristics estimation unit 201, divider unit 202, TMCC signal decoding unit 203, quantization bit width determination unit 204, and quantization unit 205.

Demodulation unit 108 receives the OFDM signals in the frequency domain from frequency conversion unit 107. Transmitted signal's propagation characteristics estimation unit 201 extracts the OFDM signals in the frequency domain of the OFDM carrier containing the pilot signals. Transmitted signal's propagation characteristics estimation unit 201 then compares the extracted signals with the reference values (the known amplitude and phase) to determine the changes in amplitude and phase, thereby calculating the transmitted signal's propagation characteristics (the degrees of deviation in amplitude and phase) of the OFDM carrier containing the pilot signals. The transmitted signal's propagation characteristics obtained from the pilot signals are interpolated in the time and frequency directions, thereby estimating the transmitted signal's propagation characteristics of the OFDM carrier in the vicinity of the pilot signals. Demodulation unit 108 then outputs the transmitted signal's propagation characteristics estimation value signals, which are the estimation results of the transmitted signal's propagation characteristics to divider unit 202 and quantization unit 205.

Divider unit 202 divides the complex signals received from frequency conversion unit 107 by the transmitted signal's propagation characteristics estimation value signals received from transmitted signal's propagation characteristics estimation unit 201, thereby calculating the divided complex signals. Divider unit 202 then outputs the divided complex signals to quantization unit 205. In the dividing process, the complex signals need to be divided by the transmitted signal's propagation characteristics estimation value signals corresponding to the carrier containing the signals received from frequency conversion unit 107. Divider unit 202 also outputs the signals indicating the symbol numbers and the carrier numbers of the divided complex signals to quantization unit 205.

TMCC signal decoding unit 203 extracts and demodulates the TMCC signals inserted in the specific OFDM carrier, and detects the various parameter information (such as carrier modulation scheme/convolusional coding rate at each hierarchical level, interleaving length, and the number of segments). TMCC signal decoding unit 203 then informs both quantization bit width determination unit 204 and deinterleave unit 109 of interleaving length signals indicating the interleaving lengths as one of the OFDM parameter signals.

Quantization bit width determination unit 204 receives the interleaving length signals from TMCC signal decoding unit 203. Quantization bit width determination unit 204 then calculates the quantization bit widths based on the interleaving length signals received, and outputs them to quantization bit width determination unit 204 and deinterleave unit 109.

Quantization unit 205 receives the signals indicating the symbol numbers and the carrier numbers of the divided complex signals from divider unit 202, and also receives the transmitted signal's propagation characteristics estimation value signals from transmitted signal's propagation characteristics estimation unit 201. Quantization unit 205 also receives the quantization bit width signals from the quantization bit width determination unit. Quantization unit 205 then quantizes the divided complex signals and the transmitted signal's propagation characteristics estimation value signals according to the quantization bit width signals, and outputs them to deinterleave unit 109. Quantization unit 205 also outputs the signals indicating the symbol numbers and the carrier numbers as they are to deinterleave unit 109.

The following is a detailed description of the method for calculating the quantization bit widths. Quantization unit 205 quantizes the signals in accordance with the instructions from quantization bit width determination unit 204. When the interleaving length is the longest, the data bit width per OFDM carrier signal is set to N bits. For example, when each divided complex signal has 8 bits for each of the real and imaginary parts, and each transmitted signal's propagation characteristics estimation value signal has 4 bits, the data to be outputted has 20 bits.

When the interleaving length is one half of the longest length, the data bit width per OFDM carrier signal is set to 2N bits. For example, if a total of 20 bits of data is outputted when the interleaving length is the longest, then a total of 40 bits of data is outputted when the interleaving length is one half of the longest length. In this case, it is possible to combine a divided complex signal of 16 bits for each of the real and imaginary parts and a transmitted signal's propagation characteristics estimation value signal of 8 bits.

The data bit width does not necessarily have to be 2N bits. It can alternatively be an appropriate value between N and 2N, or extra information can be outputted to a later stage.

The operation of deinterleave unit 109 is described as follows. Deinterleave unit 109 receives from quantization unit 205 the divided complex signals, the signals indicating the symbol numbers and the carrier numbers of the divided complex signals, and the transmitted signal's propagation characteristics estimation value signals. Deinterleave unit 109 also receives from TMCC signal decoding unit 203 the OFDM parameter signals obtained by decoding the TMCC signals. Deinterleave unit 109 also receives from quantization bit width determination unit 204 the quantization bit width signals indicating the quantizing methods used in quantization unit 205. Thus, deinterleave unit 109 again sorts the data, which was sorted when transmitted, to return it to the original order. In the sorting process, the bit widths of the divided complex signals and the transmitted signal's propagation characteristics estimation value signals received from demodulation unit 108 are changed according to the interleaving length. Therefore, the method for using storage unit 113 such as a memory is changed according to the quantization bit width signals received from quantization bit width determination unit 204.

The method for using storage unit 113 is described in detail as follows.

The following description is based on the assumption that storage unit 113 of deinterleave unit 109 has a storage capacity of "M" addresses and "N" words. In other words, it is assumed that "N" words are the same as data bit width "N" when the interleaving length is the longest. When the interleaving length is the longest, and N-bit data is received per piece of data from demodulation unit 108, data writing and data reading are performed using one address for each piece of data.

When the interleaving length is one half of the longest length and 2N-bit data is received from demodulation unit 108, the data writing and the data reading are performed using two addresses for each piece of data. Furthermore, when the interleaving length is one quarter of the longest length and 4N-bit data is received from demodulation unit 108, the data writing and the data reading are performed using four addresses for each piece of data.

Deinterleave unit 109 outputs deinterleaved signals, which are obtained by sorting the data of the divided complex signals, to the subsequent demapping unit 110. The bit width of data to be outputted may be increased or decreased according to the interleaving length. Alternatively, when 2N-bit data is outputted, N-bit data may be outputted twice and restored to the original 2N-bit data in the subsequent demapping unit 110.

Demapping unit 110 restores the data based on the deinterleaved signals received from deinterleave unit 109.
As described above, the bit width changes to N, 2N, 4N, etc. according to the interleaving length.

Hence, demapping unit 110 is designed to perform calculations according to the largest possible number of bits that the information received from deinterleave unit 109 can have. When the number of bits is insufficient because the interleaving length is the longest or other reasons, the deficient bits are replaced by 0. As a result, even if the bit width of the data received from deinterleave unit 109 is changed, demapping unit 110 can perform internal processing regardless of the interleaving length.

Demapping unit 110 outputs bit strings of 0' and 1's when a hard decision process has been performed, and outputs "a likelihood of 0" and "a likelihood of 1" as discrete values when a soft decision process has been performed. It is also possible to correct the hard decision results or the soft decision results using the information separately received in the unit of carrier. For example, when it is determined that the amount of noise of a specific carrier is large, the output values can be corrected to make "a likelihood of 0" and "a likelihood of 1"equal to each other, and the output values are not used for an error correction process in the error correction unit at a later stage.

With this structure, when the interleaving length is not the longest, the quantization bit widths can be increased and the demodulation performance can be improved. In other words, it is possible to make the bit width of a deinterleaved signal increase with decreasing the interleaving length indicated by an interleaving length signal. In this manner, the quantization bit widths of the deinterleaved signals outputted from deinterleave unit 109 can be changed according to the interleaving length signals contained in the OFDM parameter signals, thereby improving the demodulation performance.

In the present embodiment, the number of bits "N" required to express one piece of data is set with reference to the largest interleaving length, but can alternatively be set smaller, for example, when signals are hardly transmitted with the interleaving length set to the longest length. This causes a reduction in the demodulation performance of the signals transmitted with the interleaving length set to the longest length because the signal demodulation performance decreases with decreasing number of bits "N". This, however, can reduce the capacity of storage unit 113 such as a memory circuit required in deinterleave unit 109 of the later stage. The bit width "N" can be adjusted to be suitable for the interleaving length to be used most frequently.

In the present embodiment, demodulation unit 108 outputs the divided complex signals in the transmitted signal points and the transmitted signal's propagation characteristics estimation value signals. Alternatively, demodulation unit 108 can also output the information on the amount of noise contained in OFDM carriers. For example, when a total of 20 bits of data is outputted in the case of the longest interleaving length, it is alternatively possible to output a total of 30 bits of data by making each divided complex signal have 12 bits for each of the real and imaginary parts, and each transmitted signal's propagation characteristics estimation value signal have 6 bits. The remaining 10 bits can be used to output information such as the amount of noise contained in each carrier. It is possible that demodulation unit 108 includes amount-of-noise detection unit 207, which detects the amount of noise contained in the OFDM carriers and outputs amount-of-noise signals indicating the amount of noise detected. Amount-of-noise detection unit 207 outputs the amount-of-noise signals to deinterleave unit 109. When the interleaving lengths indicated by the interleaving length signals are decreased, deinterleave unit 109 sorts the data of the amount-of-noise signals in addition to the divided complex signals and the transmitted signal's propagation characteristics estimation value signals which are outputted from quantization unit 205. Demapping unit 110, which subjects the deinterleaved signals to hard decision or soft decision, can operate to reduce the likelihood of the signals contained in the carrier that has been determined to contain a large amount of noise. The carrier is determined to contain a large amount of noise based on the amount-of-noise signals outputted from amount-of-noise detection unit 207.

With this structure, when OFDM signals contain frequency-selective noise, the amount of noise contained in the signals differs depending on the carrier. Therefore, the amount of noise contained in the signals is calculated per OFDM carrier separately, and the signals contained in the carrier which has been determined to contain a large amount of noise are set to have a low likelihood (reliability) by demapping unit 110. The likelihood (reliability) is the determination level to determine the output value of a signal. This structure allows an OFDM receiver capable of operating in noisy reception environments.

### SECOND EMBODIMENT

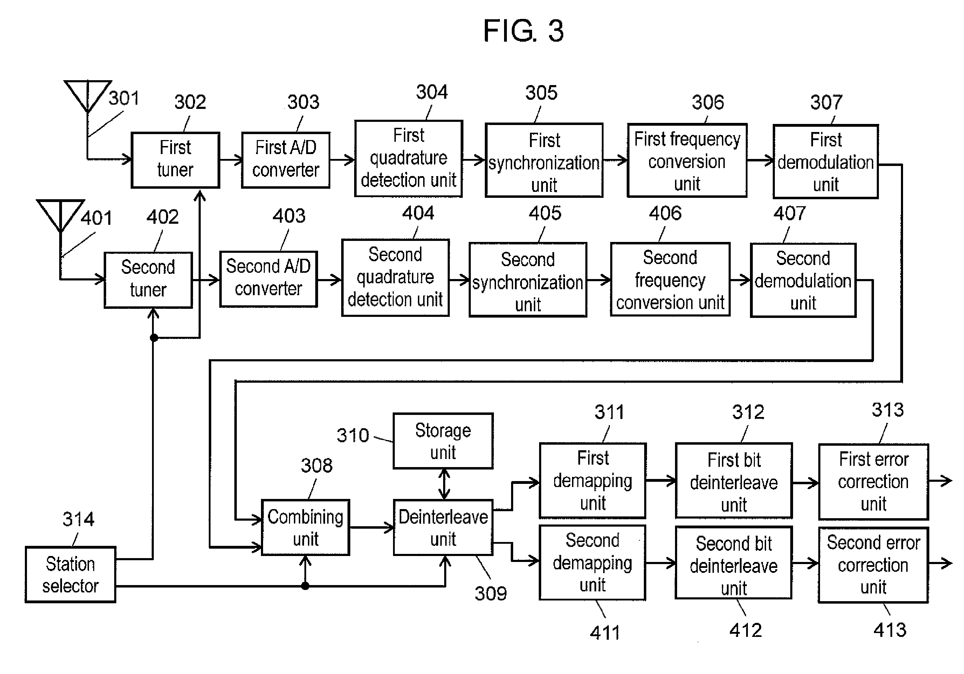

An OFDM receiver according to another embodiment of the present invention is described as follows. Fig. 3 is a block diagram showing the structure of the OFDM receiver of the second embodiment.

As shown in Fig. 3, the OFDM receiver of the present embodiment includes first antenna 301, second antenna 401, first tuner 302, second tuner 402, first A/D converter 303, second A/D converter 403, first quadrature detection unit 304, second quadrature detection unit 404, first synchronization unit 305, second synchronization unit 405, first frequency conversion unit 306, second frequency conversion unit 406, first demodulation unit 307, second demodulation unit 407, combining unit 308, deinterleave unit 309, storage unit 310, first demapping unit 311, second demapping unit 411, first bit deinterleave unit 312, second bit deinterleave unit 412, first error correction unit 313, second error correction unit 413, and station selector 314. The OFDM receiver of the present embodiment differs from that of the first embodiment shown in Fig. 1 by having two systems of antennas, tuners, A/D converters, quadrature detection units, synchronization units, demodulation units, demapping units, and error correction units and also having a combining unit. The operations of first antenna 301 through first frequency conversion unit 306 and operations of second antenna 401 through second frequency conversion unit 406 are identical to those of antenna 101 through frequency conversion unit 107 of the first embodiment shown in Fig. 1. The operations of first bit deinterleave unit 312 through first error correction unit 313 and of second bit deinterleave unit 412 through second error correction unit 413 shown in Fig. 3 are identical to those of bit deinterleave unit 111 and error correction unit 112 of the first embodiment shown in Fig. 1. Therefore, the operations of these units are not described again in the present second embodiment. The following description is focused on the operations of first demodulation unit 307, second demodulation unit 407, combining unit 308, deinterleave unit 309, storage unit 310, first demapping unit 311, second demapping unit 411, and station selector 314.

Station selector 314 of Fig. 3 specifies the frequency ranges which are selected by first and second tuners 302 and 402 in accordance with the instructions from the user, a program, or the like. First and second tuners 302 and 402 may select either the same frequency or different frequencies from each other.

First demodulation unit 307 receives the OFDM signals in the frequency domain from first antenna 301. Second demodulation unit 407 receives the OFDM signals in the frequency domain from second antenna 401. First and second demodulation units 307 and 407 perform the same operation. First and second demodulation units 307 and 407 differ from demodulation unit 108 of the first embodiment in having fixed bit widths of output data regardless of the interleaving length, and also in informing combining unit 308 of the OFDM parameter signals obtained by decoding the TMCC signals in the demodulation process and the signals indicating the symbol numbers and the carrier numbers.

First and second demodulation units 307 and 407 calculate the transmitted signal's propagation characteristics of all OFDM carriers by utilizing the fact that the pilot signals are known-pattern signals as mentioned in the first embodiment. The transmitted signal's propagation characteristics obtained from the pilot signals are interpolated in the time and frequency directions, thereby estimating the transmitted signal's propagation characteristics of the OFDM carrier in the vicinity of the pilot signals. Then, each of first and second demodulation units 307 and 407 divides the OFDM signals in the frequency domain received from first or second frequency conversion unit 306 or 406 by the transmitted signal's propagation characteristics (estimation results) corresponding to these signals. Thus, the received signals can be divided by the estimates of the transmitted signal's propagation characteristics to obtain the estimates of the transmitted signal points. The estimates of the transmitted signal points are referred to as divided complex signals.

Each of first and second demodulation units 307 and 407 outputs to combining unit 308 the divided complex signals and the signals indicating the magnitudes (for example, transfer function power) of the estimates of the transmitted signal's propagation characteristics of each OFDM carrier. The signals indicating the magnitudes of the estimates of the transmitted signal's propagation characteristics are referred to as transmitted signal's propagation characteristics estimation value signals. Before being outputted to combining unit 308, the divided complex signals and the transmitted signal's propagation characteristics estimation value signals need to be quantized. For example, each divided complex signal can be set to have a quantization bit width of 8 bits for each of the real and imaginary parts, and each transmitted signal's propagation characteristics estimation value signal can be set to have a quantization bit width of 4 bits to output 20 bits (8 bits + 8 bits+ 4 bits) of data per OFDM carrier. It is alternatively possible to double the transfer speed of data and output the real part and the imaginary part separately, thereby halving the number of bits to be outputted one time. In this case, it is necessary to output a signal indicating which signal represents the real part or to arrange the signal in the order that the signal representing the real part can be determined from the head of a signal indicating the OFDM carrier number.

Combining unit 308 then receives from each of first and second demodulation units 307 and 407 the divided complex signals, the transmitted signal's propagation characteristics estimation value signals, the OFDM parameter signals obtained by decoding the TMCC signals, and the signals indicating the symbol numbers and the OFDM carrier numbers in which the divided complex signals and the transmitted signal's propagation characteristics estimation value signals are contained- Combining unit 308 also receives station-selecting instruction information of first and second tuners 302 and 402 from station selector 314. The station-selecting instruction information indicates whether the signals received from first and second demodulation units 307 and 407 are obtained from the same broadcast wave or not. The station-selecting instruction information is needed because combining unit 308 operates differently depending on whether first and second demodulation units 307 and 407 have received the same broadcast wave or different broadcast waves from each other.

The following is a description of the case where first and second demodulation units 307 and 407 have received the same broadcast wave. Combining unit 308 combines the divided complex signals and the transmitted signal's propagation characteristics estimation value signals received from first and second demodulation units 307 and 407. Combining unit 308 then outputs the combined results to deinterleave unit 309.

The divided complex signals and the transmitted signal's propagation characteristics estimation value signals are combined by, for example, calculating the weighting ratio in the unit of subcarrier of an OFDM signal. Then, the estimates of the transmitted signal points and the transmitted signal's propagation characteristics estimation value signals are respectively weighting-combined. The weighting ratio is preferably calculated according to the method called maximal ratio combining. The power of the noise contained in each signal is calculated in the unit of subcarrier, and the weighting ratio is set so that the combined signals can contain a minimum amount of noise.

Combining unit 308 outputs to deinterleave unit 309 the divided complex signals and the transmitted signal's propagation characteristics estimation value signals having the same bit widths as those received from first and second demodulation units 307 and 407.

In order to simplify the structure of combining unit 308, it is possible to set the weighting ratio of a high-quality signal to 1 and the weighting ratio of a low-quality signal to 0 in the unit of OFDM carrier, and to select one of them. Alternatively, received signals can be weighting-combined in the unit of OFDM carrier according to the amplitude ratio of the signals.

The following is a description of the case where first and second demodulation units 307 and 407 have received different broadcast waves from each other. Combining unit 308 receives the divided complex signals and the transmitted signal's propagation characteristics estimation value signals from each of first and second demodulation units 307 and 407. Combining unit 308 also receives interleaving length signals indicating the interleaving lengths as one of the OFDM parameter signals obtained by decoding the TMCC signals received from second demodulation unit 407. The interleaving length signals are compared at each hierarchical level. When the interleaving lengths are equal to each other and shorter than the longest length defined by the parameter, combining unit 308 multiplexes the divided complex signals and the transmitted signal's propagation characteristics estimation value signals received from first and second demodulation units 307 and 407. Combining unit 308 then outputs them to deinterleave unit 309.

Thus, the OFDM receiver of the present embodiment includes combining unit 308 and deinterleave unit 309. Combining unit 308 receives from first demodulation unit 307 first divided complex signals, first transmitted signal's propagation characteristics estimation value signals, and first OFDM parameter signals, and receives from second demodulation unit 407, second divided complex signals, second transmitted signal's propagation characteristics estimation value signals, and second OFDM parameter signals. Combining unit 308 then combines these signals and outputs combined divided complex signals, combined transmitted signal's propagation characteristics estimation value signals, and combined OFDM parameter signals. Deinterleave unit 309 sorts the data of the combined divided complex signals in the frequency and time directions based on the combined OFDM parameter signals, and output the deinterleaved signals. When first and second tuners 302 and 402 have selected different frequencies from each other and the first and second OFDM parameter signals indicate the same interleaving length which is shorter than the predetermined interleaving length, combining unit 308 multiplexes the first and second divided complex signals, the first and second transmitted signal's propagation characteristics estimation value signals, and the first and second OFDM parameter signals, respectively. Combining unit 308 then outputs the multiplexed signals to deinterleave unit 309.

Hence, for example, assume a case where the divided complex signals received from first and second demodulation units 307 and 407 each have 8 bits for each of the real and imaginary parts, and the transmitted signal's propagation characteristics estimation value signals each have 4 bits. Combining unit 308 outputs the divided complex signals each having 16 bits for each of the real and imaginary parts, and the transmitted signal's propagation characteristics estimation value signals each having 8 bits to deinterleave unit 309. In this case, it is possible to assign the signals received from first demodulation unit 307 to higher-order bits and the signals from second demodulation unit 407 to lower-order bits to divide the data easily in a later stage.

The comparison of the two interleaving lengths at each hierarchical level indicates that when the interleaving lengths have the longest length defined by the parameter or are different from each other, combining unit 308 outputs the signals of either first demodulation unit 307 or second demodulation unit 407 as they are. The interleaving length signals contain the information on the interleaving lengths at each hierarchical level and can determine the interleaving lengths at each hierarchical level and change the number of bits to be outputted.

Combining unit 308 also outputs to deinterleave unit 309 the OFDM parameter signals obtained by decoding the TMCC signals received from first and second demodulation units 307 and 407, and the signals indicating the symbol numbers and the OFDM carrier numbers in which the divided complex signals and the transmitted signal's propagation characteristics estimation value signals are contained.

The following is a description of the operation of deinterleave unit 309. Deinterleave unit 309 receives from combining unit 308 the divided complex signals, the transmitted signal's propagation characteristics estimation value signals, the OFDM parameter signals obtained by decoding the TMCC signals, and the signals indicating the symbol numbers and the OFDM carrier numbers in which the divided complex signals and the transmitted signal's propagation characteristics estimation value signals are contained.

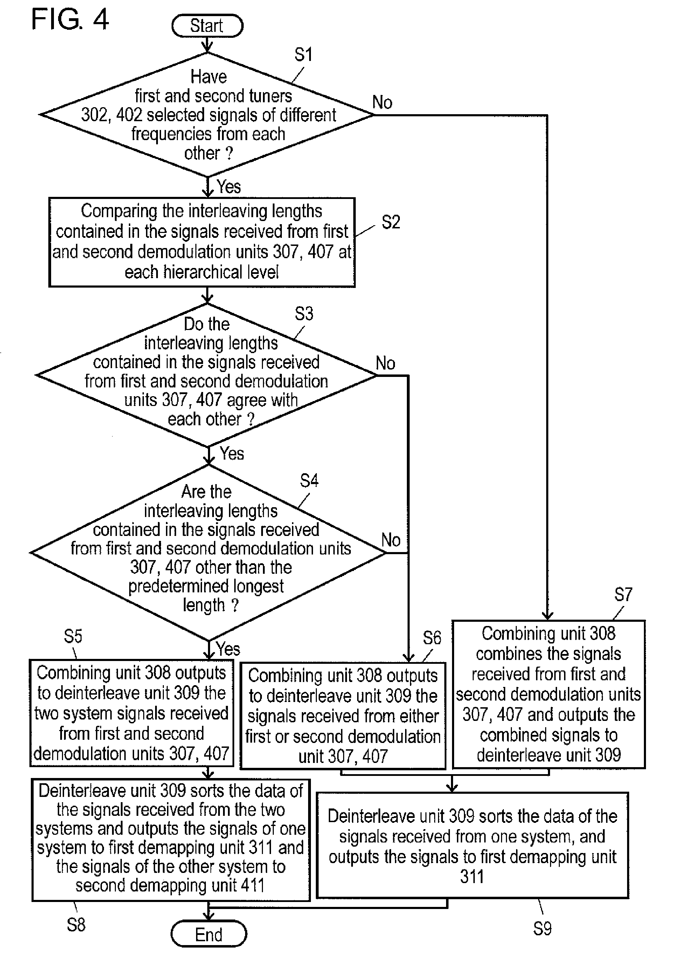

The operation of deinterleave unit 309 is described with reference to Fig. 4. The flowchart of Fig. 4 shows the procedure of combining unit 308 and deinterleave unit 309. In Fig. 4, Steps S1 to S7 show the procedure of combining unit 308, and Steps S8 and S9 show the procedure of deinterleave unit 309.

Combining unit 308 receives the information from station selector 314 and determines whether first and second tuners 302 and 402 have selected signals of different frequencies from each other (Step S1). When first and second tuners 302 and 402 have selected signals of different frequencies (Yes), combining unit 308 extracts the information on the interleaving lengths at each hierarchical level from the decoding results of the TMCC signals received from first and second demodulation units 307 and 407, and compares them (Step S2). Thus, combining unit 308 compares at each hierarchical level the interleaving lengths contained in the signals received from first and second demodulation units 307 and 407, and determines at each hierarchical level whether the interleaving lengths agree with each other (Step S3). In Step S3, when the interleaving lengths compared at each hierarchical level agree with each other (Yes), combining unit 308 determines whether the interleaving length is other than the predetermined longest length (Step S4). When determined that the interleaving length is other than the predetermined longest length in Step S4 (Yes), combining unit 308 outputs the signals received from first and second demodulation units 307 and 407 to deinterleave unit 309 (Step S5). On the other hand, when the interleaving lengths compared at each hierarchical level do not agree with each other in Step S3 (No), or when the interleaving lengths are the longest length in Step S4 (No), combining unit 308 outputs either the signals received from first demodulation unit 307 or the signals received from second demodulation unit 407 to deinterleave unit 309 (Step S6). The processes in Steps S5 and S6 are performed at each hierarchical level. For example, when the OFDM signals received from first and second demodulation units 307 and 407 have two hierarchical levels, it is possible to perform the process of Step S5 at one hierarchical level and the process of Step S6 at the other level. When first and second tuners 302 and 402 have selected the signals of the same frequency in Step S1 (No), combining unit 308 combines the signals obtained from first and second demodulation units 307 and 407 (Step S7).

When combining unit 308 has outputted the signals received from the two systems in Step S5, deinterleave unit 309 again sorts the data of the signals of each system, which was sorted when transmitted, to return it to the original order. Deinterleave unit 309 outputs the signals of one system to first demapping unit 311 and the signals of the other system to second demapping unit 411 (Step S8). On the other hand, when combining unit 308 has outputted signals of one system in Step S6 or S5, deinterleave unit 309 again sorts the data of the signals of the system, which was sorted when the signals were transmitted, to return it to the original order, and output the sorted data to first demapping unit 311 (Step S9). In the processes of Steps S8 and S9, data writing and data reading are performed using storage unit 310 such as a memory in the same manner as in the first embodiment.

The following is a description of a method for using storage unit 310.

When performing the process of Step S9 of Fig. 4, deinterleave unit 309 writes to storage unit 310 the divided complex signals and the transmitted signal's propagation characteristics estimation value signals of one system received from combining unit 308 using the separately received information on the OFDM symbol numbers and the OFDM carrier numbers in which the signals are contained. At the same time, deinterleave unit 309 reads the signals previously stored in storage unit 310 and outputs them.

In the case of performing the process of Step S8 of Fig. 4, deinterleave unit 309 receives the divided complex signals and the transmitted signal's propagation characteristics estimation value signals of the two systems and sorts the data. Since it is necessary to process twice as many signals as one system, the data writing and the data reading to/from storage unit 310 are performed twice quicker so as to sort the data of the complex signals and the transmitted signal's propagation characteristics estimation value signals of the two systems.

Deinterleave unit 309 outputs the deinterleaved signals, which are the sorted data, to subsequent first and second demapping units 311 and 411. Deinterleave unit 309 also outputs the OFDM parameter signals obtained by decoding the TMCC signals to first and second demapping units 311 and 411.

First and second demapping units 311 and 411 each restore the data based on the deinterleaved signals received from deinterleave unit 309. Unlike in the first embodiment, the bit widths are fixed regardless of the interleaving length.

Each of first and second demapping units 311 and 411 outputs bit strings of 0' and 1's when a hard decision process has been performed, and outputs "a likelihood of 0" and "a likelihood of 1" as discrete values when a soft decision process has been performed. It is also possible to correct the hard decision results or the soft decision results using the information separately received in the unit of carrier. For example, when it is determined that the amount of noise of a specific carrier is large, the output values can be corrected to make "a likelihood of 0" and "a likelihood of 1" equal to each other, and the output values are not used for an error correction process in the error correction unit at a later stage.

In the process of Step S9 of Fig. 4, second demapping unit 411, second bit deinterleave unit 412, and second error correction unit 413 do not operate because no signals are delivered.

The present embodiment has two systems of antennas, tuners, A/D converters, quadrature detection units, synchronization units, and demodulation units, but may alternatively have three or more systems. For example, it is possible to have four systems of antennas, tuners, A/D converters, quadrature detection units, synchronization units, and demodulation units. In this case, the signals of the same frequency are selected, demodulated, and combined in each two systems. Combining unit 308 of Fig. 3 outputs the combined signals of each two systems to deinterleave unit 309.

As described hereinbefore, the OFDM receiver of the present invention demodulates signals which have undergone an interleaving process. When receiving a signal transmitted with the interleaving length set other than the longest length, the OFDM receiver can increase the number of bits to express data to be treated in the deinterleave unit without an increase in the capacity of the memory unit. This improves the bit precision of signals to be transmitted after the deinterleaving process and allows the transmission of additional information, thereby improving demodulation performance.

In the case where the longest interleaving length is hardly set, the memory capacity can be suited to interleaving lengths shorter than the longest length to prevent an increase in the circuit size and to perform the demodulation process of a signal received with the interleaving length set to the longest length although the demodulation performance is somewhat deteriorated.

When having a plurality of systems of antennas, tuners, A/D converters, quadrature detection units, synchronization units, and demodulation units, the OFDM receiver of the present invention outputs combined signals when received signals are low quality and outputs individual signals when the signals are high quality. The signals of a plurality of systems can be outputted concurrently using an existing storage device without the need of providing an additional storage unit, which would cause an increase in the circuit size of the OFDM receiver.

### INDUSTRIAL APPLICABILITY

When receiving a signal transmitted with the interleaving length set other than the longest length, the OFDM receiver can increase the number of bits to express data to be treated in the deinterleave unit without an increase in the capacity of the memory unit. This OFDM receiver is useful for OFDM receiving devices.

## Claims

1. An OFDM receiver comprising:
a demodulation unit for receiving an OFDM signal in a frequency domain and for outputting:
a transmitted signal's propagation characteristics estimation value signal as an estimate of transmitted signal's propagation characteristics of each OFDM carrier,
a divided complex signal obtained by dividing the OFDM signal in the frequency domain by the transmitted signal's propagation characteristics estimation value signal,
an OFDM parameter signal obtained by decoding a TMCC signal contained in the OFDM signal in the frequency domain, and
a quantization bit width signal indicating a quantization bit width of the divided complex signal and the transmitted signal's propagation characteristics estimation value signal; and
a deinterleave unit for sorting data of the divided complex signal in frequency and time directions based on the OFDM parameter signal and the quantization bit width signal, and for outputting the divided complex signal together with the transmitted signal's propagation characteristics estimation value signal as a deinterleaved signal, wherein
the quantization bit width of the deinterleaved signals outputted from the deinterleave unit are changed according to an interleaving length signal contained in the OFDM parameter signal.

2. The OFDM receiver of claim 1, wherein
the demodulation unit includes:
a transmitted signal's propagation characteristics estimation unit for calculating the estimate of the transmitted signal's propagation characteristics of the OFDM carrier from the OFDM signal in the frequency domain, and outputting the transmitted signal's propagation characteristics estimation value signal;
a TMCC signal decoding unit for decoding the TMCC signal contained in the OFDM signal in the frequency domain, and outputting the OFDM parameter signal and the interleaving length signal;
a divider unit for dividing the OFDM signal in the frequency domain by the transmitted signal's propagation characteristics estimation value signal, and outputting the divided complex signal;
a quantization bit width determination unit for calculating the quantization bit width from the interleaving length signal, and outputting the quantization bit width signal; and
a quantization unit for quantizing the divided complex signal and the transmitted signal's propagation characteristics estimation value signal according to the quantization bit width signal, and outputting a quantized signal to the deinterleave unit.

3. The OFDM receiver of claim 1, wherein
when the interleaving length signal indicates a shorter interleaving length, the deinterleaved signal has a longer bit width.

4. The OFDM receiver of claim 1, wherein
the demodulation unit includes:
an amount-of-noise detection unit for detecting an amount of noise contained in the OFDM carrier, and outputting an amount-of-noise signal indicating the amount of noise detected, wherein
a demapping unit for subjecting the deinterleaved signals to one of a hard decision and a soft decision reduces a likelihood of a signal contained in a carrier that has been determined to contain a large amount of noise based on the amount-of-noise signal.

5. The OFDM receiver of claim 1, comprising a plurality of antennas including a first antenna and a second antenna, the OFDM receiver being capable of selecting and demodulating broadcast waves received by the first antenna and the second antenna at different frequencies from each other, wherein
the demodulation unit includes:
a first demodulation unit for receiving an OFDM signal in the frequency domain from the first antenna; and
a second demodulation unit for receiving an OFDM signal in the frequency domain from the second antenna,
the OFDM receiver further comprising:
a combining unit for receiving a first divided complex signal, a first transmitted signal's propagation characteristics estimation value signal, and a first OFDM parameter signal from the first demodulation unit, and
receiving a second divided complex signal, a second transmitted signal's propagation characteristics estimation value signal, and a second OFDM parameter signal from the second demodulation unit,
combining the signals received from the first demodulation unit and the second demodulation unit, and
outputting a combined divided complex signal, a combined transmitted signal's propagation characteristics estimation value signal, and a combined OFDM parameter signal, wherein
the deinterleave unit sorts data of the combined divided complex signal in frequency and time directions based on the combined OFDM parameter signal, and outputs the deinterleaved signals, and
in a case where the selected frequencies are different from each other, the first OFDM parameter signal and the second OFDM parameter signal indicate a same interleaving length, and the same interleaving length being shorter than a predetermined interleaving length,
the combining unit multiplexes between the first divided complex signal and the second divided complex signal, between the first transmitted signal's propagation characteristics estimation value signal and the second transmitted signal's propagation characteristics estimation value signal, and between the first OFDM parameter signal and the second OFDM parameter signal, and then outputs multiplexed signals to the deinterleave unit.
